# Europäisches Patentamt
# European Patent Office
# Office européen des brevets

(11) Veröffentlichungsnummer: **0 189 531**
**B1**

(12) **EUROPÄISCHE PATENTSCHRIFT**

(45) Veröffentlichungstag der Patentschrift:
12.04.89

(21) Anmeldenummer: 85113796.8

(22) Anmeldetag: 30.10.85

(51) Int. Cl.⁴: **B 60 N 1/08**

(54) Feststellvorrichtung für längsverschiebbare Fahrzeugsitze.

(30) Priorität: 06.12.84 DE 3444483

(43) Veröffentlichungstag der Anmeldung:
06.08.86 Patentblatt 86/32

(45) Bekanntmachung des Hinweises auf die Patenterteilung:
12.04.89 Patentblatt 89/15

(84) Benannte Vertragsstaaten:
DE FR GB IT

(56) Entgegenhaltungen:
DE-A- 1 505 747
DE-C- 1 087 914

(73) Patentinhaber: **Dr.Ing.h.c. F. Porsche Aktiengesellschaft, Porschestrasse 42, D-7000 Stuttgart 40 (DE)**

(72) Erfinder: **Cira, Ismail-Hakki, Dipl.-Ing., Küstriner Strasse 2, D-7530 Pforzheim (DE)**
Erfinder: **Stahl, Hans-Werner, Dipl.-Ing., Hauptmannsreute 140, D-7000 Stuttgart- 1 (DE)**

ACTORUM AG

# Beschreibung

Die Erfindung bezieht sich auf eine Feststellvorrichtung für längsverschiebbare Fahrzeugsitze, bei denen das Sitzteil mittels Gleitschienen in am Fahrzeugboden verankerten Führungsschienen geführt ist, wobei zur Arretierung der jeweils gewählten Sitzstellung zwei in Querrichtung verschiebbar gelagerte Sperrbolzen unter Vermittlung von Übertragungsgliedern und eines Betätigungsorgans in Eingriff mit Rasten der an gegenüberliegenden Sitzlängsseiten vorgesehenen Führungsschienen bringbar sind.

Eine Feststellvorrichtung der eingangs genannten Bauart ist durch die DE-B-15 05 747 bekannt. Bei dieser Anordnung ist ein schwenkbarer Betätigungshebel vorgesehen, der etwa im gleichen Abstand von seinem Drehpunkt mit je einem Gestänge verbunden ist. An den äusseren Enden der Gestänge sind Sperrbolzen angebracht, die in Eingriff mir Rasten von Führungsschienen gebracht werden können.

Dieser Ausführung haftet der Nachteil an, dass die beiden Sperrbolzen beim Verschwenken des Hebels aufgrund kinematischer Gegebenheiten eine kreisbogenförmige Bahn beschreiben, wodurch ein Verspannen zwischen den Sperrbolzen und den Rasten der Führungsschienen auftreten kann. Ferner müssen wegen der kreisbogenförmigen Bewegung der Sperrbolzen zwischen den Rasten und den Sperrbolzen relativ grosse Toleranzen vorgesehen werden, die im Fahrbetrieb zu störenden Klappergeräuschen führen.

Ausserdem beanspruchen die Bauteile der Feststellvorrichtung unterhalb des Sitzrahmens viel Bauraum, wodurch die freie Gestaltung in diesem Bereich beeinträchtigt wird. Damit diese Feststellvorrichtung auch hohen Belastungen standhält (z.B. Fahrzeugaufprall) müssen die Sperrbolzen entsprechend gross dimensioniert werden. Da jedoch die Sperrbolzen einstückig mit den Gestängen ausgebildet sind, verursacht diese Feststellvorrichtung ein hohes Gewicht.

Aufgabe der Erfindung ist es, eine Feststellvorrichtung für längsverschiebbare Fahrzeugsitze zu schaffen, die bei guter Funktion einen einfachen Aufbau aufweist, ein geringes Gewicht besitzt und ausserdem wenig Bauraum beansprucht.

Erfindungsgemäss wird diese Aufgabe durch die kennzeichnenden Merkmale des Anspruches 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass durch die Anordnung von zwei federbeaufschlagten und teleskopartig angeordneten Rohren sowie einem Bowdenzug eine im Aufbau einfache Feststellvorrichtung geschaffen ist, die darüber hinaus eine gute Funktion aufweist, da die Sperrbolzen stets eine geradlinige Verstellbewegung ausüben. Die beiden Rohre beanspruchen nur wenig Raum (kompakte Bauweise), so dass die freie Gestaltung in diesem Bereich nicht eingeschränkt wird. Durch die geringe Länge der Sperrbolzen und die aus Kunststoff bestehenden, dünnwandigen Rohre wird eine gewichtssparende Dimensionierung der Feststellvorrichtung erreicht. Ferner ist diese Feststellvorrichtung leicht montier- bzw. demontierbar. Durch die Anschlagbügel und die Kerbstifte wird die Verstellbewegung der Sperrbolzen funktionsgerecht begrenzt. Die in die Gleitschiene eingesetzten Führungshülsen dienen einerseits zur lösbaren Befestigung der Gleitschiene mit dem Sitzrahmen und andererseits zur funktionsgerechten Lagerung der Sperrbolzen.

Ausserdem ist nur ein einziger Bowdenzug zur gemeinsamen Verstellbewegung der beiden an gegenüberliegenden Seiten angeordneten Sperrbolzen erforderlich. Die zwischen den beiden teleskopartig angeordneten Rohren vorgesehene Druckfeder sucht die beiden Sperrbolzen nach Freigabe des Betätigungsorgans zur Aussenseite hin zu bewegen.

Ein Ausführungsbeispiel der Erfindung ist in der Zeichnung dargestellt und wird im folgenden näher erläutert.

Es zeigt

Fig. 1 eine Draufsicht auf ein Sitzteil eines Fahrzeugsitzes mit der erfindungsgemässen Feststellvorrichtung,

Fig. 2 eine Ansicht in Pfeilrichtung R der Fig. 1,

Fig. 3 eine Ansicht in Pfeilrichtung S der Fig. 1, teilweise im Schnitt und um 90° gedreht dargestellt.

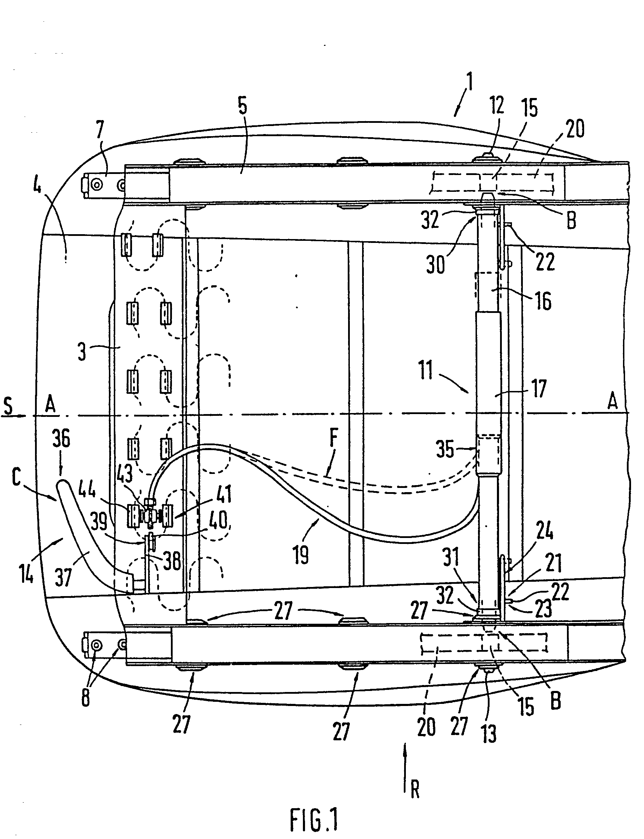

Der in Fig. 1 dargestellte Fahrzeugsitz 1 für ein Kraftfahrzeug, ein Flugzeug oder dergleichen umfasst ein Sitzteil 2 und eine nicht dargestellte, um eine horizontale Querachse schwenkbare Rückenlehne. Das aus einem Sitzrahmen 3 und einem Sitzkissen 4 bestehende Sitzteil 2 ist fest mit zwei in Fahrzeuglängsrichtung verlaufenden Gleitschienen 5 verbunden, die in am Fahrzeugboden 6 verankerten Führungsschienen 7 geführt sind.

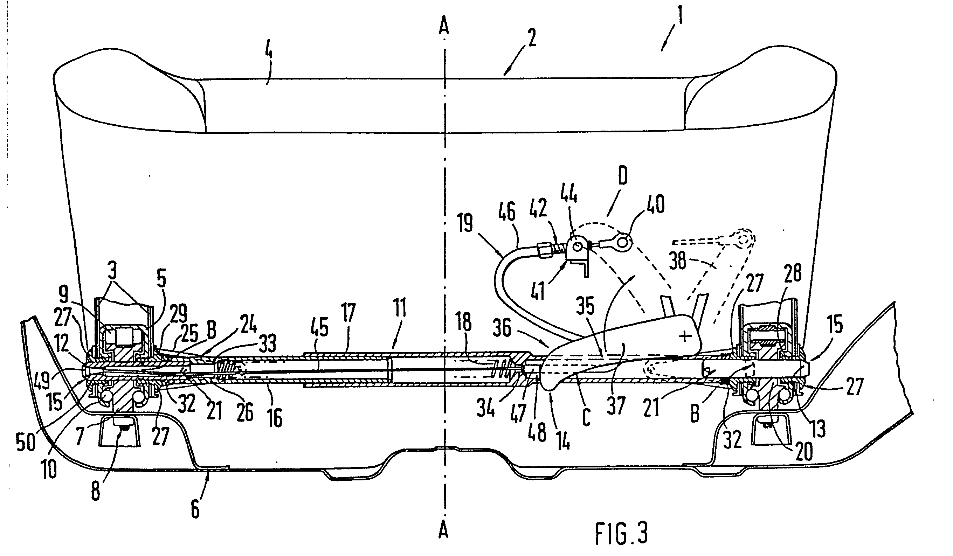

Die Führungsschienen 7 sind unter Vermittlung von mehreren, sich in vertikaler Richtung erstreckenden Schrauben 8 am Fahrzeugboden 6 befestigt. Gemäss Fig. 3 sind die Führungsschienen 7 etwa T-förmig ausgebildet, wogegen die die Führungsschienen 7 umgebenden Gleitschienen 5 etwa U-förmig profiliert sind. Zur Gewichtsreduzierung sind Gleitschienen 5 und Führungsschienen 7 vorzugsweise aus Leichtmetall (Aluminium) hergestellt. Zwischen jeder Führungsschiene 7 und der entsprechenden Gleitschiene 5 sind örtlich Rollen 9 bzw. Kugeln 10 vorgesehen, so dass eine leichtgängige Längsverstellung des Fahrzeugsitzes 1 gegeben ist. Zur Arretierung der jeweils gewählten Sitzstellung ist eine Feststellvorrichtung 11 vorgesehen, die zwei in Querrichtung verschiebbar gelagerte Sperrbolzen 12, 13 aufweist. Die Sperrbolzen 12, 13 sind unter Vermittlung von Übertragungsgliedern und eines Betätigungsorgans 14 in Eingriff mit Rasten 15 der Führungsschiene 7 bringbar.

Die Übertragungsglieder werden durch zwei teleskopartig angeordnete Rohre 16, 17 gebildet, die sich zwischen und quer zu den Gleitschienen 5 erstrecken. Jedes Rohr 16, 17 ist an seinem aussenliegenden Ende mit dem angrenzenden Sperrbolzen 12, 13 fest verbunden. Innerhalb der beiden Rohre 16, 17 ist eine Druckfeder 18 vorgesehen, die die beiden Rohre 16, 17 zur Aussenseite hin zu bewegen sucht (Fig.3).

Ferner umfasst die Feststellvorrichtung 11 einen Bowdenzug 19, der einerseits mit dem Betätigungsorgan 14 und andererseits mit dem Sperrbolzen 12 sowie mit dem mit dem Sperrbolzen verbundenen Rohr 17 zusammenwirkt, dergestalt, dass bei einer Schwenkbewegung des Betätigungsorgans 14 eine axiale Verschiebung der beiden Sperrbolzen 12, 13 in Richtung Sitzlängsmittelebene A-A erfolgt, wobei die Sperrbolzen 12, 13 ausser Eingriff mit den Rasten 15 der Führungsschiene 7 gelangen (strichpunktiert dargestellte Stellung B).

Die Rasten 15 werden durch kreisrunde Öffnungen gebildet, die in Längsrichtung gesehen mit Abstand zueinander an einem vertikalen Steg 20 der Führungsschiene 7 vorgesehen sind.

Im Ausführungsbeispiel befindet sich der Fahrzeugsitz in seiner vordersten Stellung, d.h. die Sperrbolzen 12, 13 greifen in die hinterste Raste 15 der Führungsschiene 7 ein.

Die Sperrbolzen 12, 13 ragen abschnittsweise in aussenliegende Enden 30, 31 der Rohre 16, 17 hinein, wobei zwischen jedem Rohr 16, 17 und jedem Sperrbolzen 12, 13 jeweils ein lösbares Verbindungselement 21 vorgesehen ist. Vorzugsweise wird das Verbindungselement 21 durch einen radial angeordneten Kerbstift 22 gebildet, der durch den Sperrbolzen 12, 13 und gegenüberliegende Wandungen des Rohres 16, 17 hindurchgeführt ist. Der Kerbstift 22 ragt mit einem Endabschnitt 23 aus dem Rohr 16, 17 heraus, wobei dieser Endabschnitt 23 mit einem am Sitzrahmen 3 befestigten Anschlagbügel 24 in der Weise zusammenwirkt, dass die axiale Verstellbewegung der Sperrbozen in Richtung Sitzmittellängsebene A-A begrenzt wird.

Der Endabschnitt 23 des Kerbstiftes 22 erstreckt sich innerhalb der V-förmigen Stege 25, 26 des Anschlagbügels 24, wobei die freien Enden der beiden Stege 25, 26 durch Löten, Schweissen oder dergleichen fest mit dem Sitzrahmen 3 verbunden sind. Es besteht aber auch die Möglichkeit, den Anschlagbügel U-förmig auszubilden.

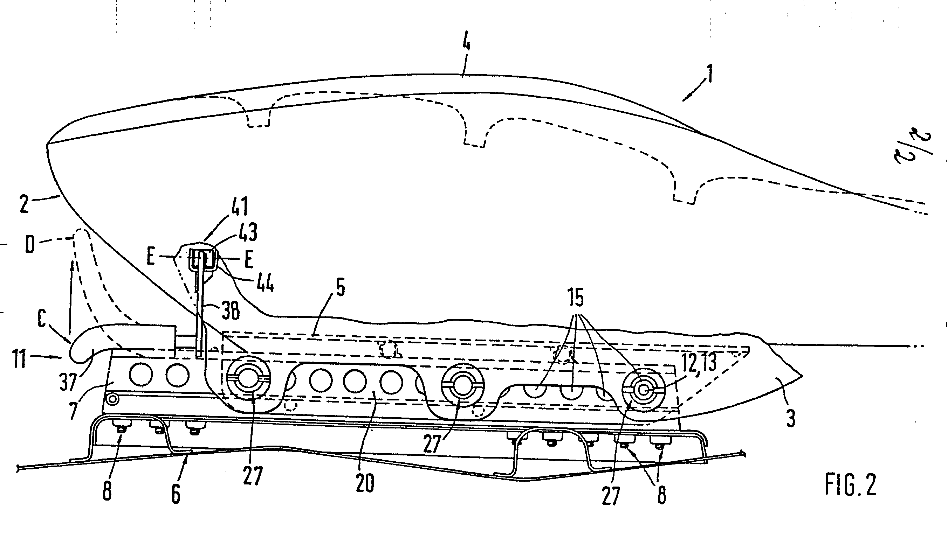

Jeder Sperrbolzen 12, 13 ist beiderseits der Führungsschiene 7 in Führungshülsen 27 gelagert, die von der Aussenseite der Gleitschiene 5 her in Gewindebohrungen 28 eindrehbar sind. Durch die Führungshülsen 27 wird ausserdem eine feste Verbindung zwischen Gleitschiene 5 und Sitzrahmen 3 bewirkt. Gemäss Fig. 2 ist die Gleitschiene 5 im vorderen, im mittleren und im hinteren Bereich mit dem Sitzrahmen 3 fest verbunden. Die Führungshülsen 27 sind endseitig mit einem Bund 29 versehen, der sich am Sitzrahmen 3 abstützt.

Zwischen den, in Querrichtung gesehen, aussenliegenden Enden 30, 31 der beiden Rohre 16, 17 und den angrenzenden Führungshülsen 27 ist jeweils ein elastisches Dämpfungselement 32 vorgesehen, das den Sperrbolzen 12, 13 umgibt. Das Dämpfungselement 32 ist beispielsweise aus Gummi oder Kunststoff hergestellt und vermeidet Anschlaggeräusche der beiden Rohre 16, 17.

Zur Abstützung der Druckfeder 18 ist an jedem Rohr 16, 17 eine Querschnittsverengung 33, 34 vorgesehen. Die beiden Rohre 16, 17 sind aus Gewichtsgründen aus Kunststoff, vorzugsweise Polyacetat, gefertigt.

Das abschnittsweise einen grösseren Aussendurchmesser aufweisende Rohr 17 ist örtlich mit einer länglichen Schlitzöffnung 35 zur Durchführung des Bowdenzugs 19 versehen und weist eine grössere Länge auf als das Rohr 16.

Das Betätigungsorgan 14 wird durch einen Schwenkhebel 36 gebildet, der von der vorderen querverlaufenden Stirnseite des Sitzes 1 aus betätigbar ist. Der Schwenkhebel 36 setzt sich aus einem Griffteil 37 und einem plattenförmigen Hebelarm 38 zusammen, wobei das Griffteil 37 von einem Ende des Hebelarms 38 weggeführt ist. Das freie Ende des Griffteils 37 erstreckt sich zur Sitzmittellängsebene A-A hin und nimmt bei verriegeltem Sitzteil eine Stellung C ein, wogegen zum Entriegeln eine Schwenkbewegung des Griffteils 37 im Uhrzeigersinn in eine Entriegelstellung D erfolgt.

Das Ende 39 des Hebelarmes 38 ist mit einer endseitigen Ringöse 40 des Bowdenzuges 19 drehbar verbunden. Der Bowdenzug 19 ist angrenzend an die Ringöse 40 in einem Lagerbock 41 einstellbar aufgenommen. Hierzu ist eine endseitige Gewindehülse 42 des Bowdenzuges 19 in eine mit einem Innengewinde versehene Rolle 43 eingedreht, die schwenkbar an einem U-förmigen Bügel 44 gelagert ist, wobei die Schwenkachse E-E in Fahrzeuglängsrichtung verläuft.

Der Bowdenzug 19 weist zwischen dem Lagerbock 41 und dem Kragen 34 des mit der Einführöffnung 35 versehenen Rohres 17 neben der Seele 45 eine aussenliegende Hülle 46 auf, wogegen im nachfolgenden Bereich lediglich die Seele 45 des Bowdenzuges 19 weitergeführt ist.

Das mit einem Verstärkungsring 47 versehene Ende 48 der Hülle 46 stützt sich an der Querschnittsverengung 34 des Rohres 17 ab und zwar auf der der Druckfeder 18 gegenüberliegenden Seite. Die Seele 45 ist durch eine Öffnung der Querschnittsverengung 34 hindurchgeführt.

Der der Ringöse 40 abgekehrte Endbereich der Seele 45 erstreckt sich durch den hohl ausgebildeten Sperrstift 12 hindurch und ist mit diesem fest verbunden. Ein stufenförmig abgesetztes Endstück 49 der Seele 45 stützt sich in einer korrespondierenden Aufnahme 50 des Sperrstiftes 12 ab.

Zwischen Lagerbock 41 und Einführöffnung 35 weist der Bowdenzug 19 bei verriegelter Feststellvorrichtung einen S-förmigen Verlauf auf, wogegen er bei entriegelter Feststellvorrichtung eine strichpunktiert dargestellte Lage F einnimmt.

## Patentansprüche

1. Feststellvorrichtung für längsverschiebbare Fahrzeugsitze, bei denen das Sitzteil (2) mittels Gleitschienen (5) in am Fahrzeugboden verankerten Führungsschienen geführt ist, wobei zur Arretierung der jeweils gewählten Sitzstellung zwei in Querrichtung verschiebbar gelagerte Sperrbolzen (13) unter Vermittlung von Übertragungsgliedern und eines Betätigungsorgans (14) in Eingriff mit Rasten der an gegenüberliegenden Sitzlängsseiten vorgesehenen Führungsschienen (7) bringbar sind, dadurch gekennzeichnet, dass die Übertragungsglieder durch zwei teleskopartig angeordnete Rohre (16, 17) gebildet werden, die sich zwischen und quer zu den Gleitschienen (5) erstrecken und mit den Sperrbolzen (12, 13) fest verbunden sind, wobei die beiden Rohre (12, 13) durch eine innenliegende Druckfeder (18) beaufschlagt sind und die Feststellvorrichtung (11) einen Bowdenzug (19) umfasst, der einerseits mit dem Betätigungsorgan (14) und andererseits mit dem Sperrbolzen (12) sowie dem mit dem Sperrbolzen (13) verbundenen Rohr (17) zusammenwirkt, dergestalt, dass bei einer Schwenkbewegung des Betätigungsorgans (14) eine axiale Bewegung der beiden Sperrbolzen (12, 13) in Richtung Sitzmittellängsebene (A-A) erfolgt, wodurch die Sperrbolzen (12, 13) ausser Eingriff mit den Rasten (15) der Führungsschiene (7) gelangen.

2. Feststellvorrichtung nach Anspruch 1, dadurch gekennzeichent, dass die Sperrbolzen (12, 13) abschnittsweise in aussenliegende Enden (30, 31) der Rohre (16, 17) hineinragen, wobei zwischen dem Sperrbolzen (12, 13) und jedem Rohr (16, 17) ein lösbares Verbindungselement (21) vorgesehen ist.

3. Feststellvorrichtung nach Anspruch 2, dadurch gekennzeichnet, dass das Verbindungselement (21) durch einen radial angeordneten Kerbstift (22) gebildet wird, der durch den Sperrbolzen (12, 13) und gegenüberliegende Wandabschnitte des Rohres (16, 17) hindurchgeführt ist, wobei ein vorstehender Endabschnitt (23) des Kerbstiftes (22) mit einem am Sitzrahmen (3) befestigten Anschlagbügel (24) zusammenwirkt.

4. Feststellvorrichtung nach Anspruch 3, dadurch gekennzeichnet, dass sich der vorstehende Endabschnitt (23) innerhalb der V-förmig angeordneten Stege (25, 26) des Anschlagbügels (24) erstreckt.

5. Feststellvorrichtung nach Anspruch 1, dadurch gekennzeichnet, dass die Sperrbolzen (12, 13) beiderseits der Führungsschiene (7) in Führungshülsen (27) gelagert sind.

6. Feststellvorrichtung nach Anspruch 5, dadurch gekennzeichnet, dass die Führungshülsen (27) von der Aussenseite der Gleitschiene (5) her in an dieser angeordnete Gewindebohrungen (28) eindrehbar sind.

7. Feststellvorrichtung nach Anspruch 1, dadurch gekennzeichnet, dass zwischen den aussenliegenden Enden (30, 31) der beiden Rohre (16, 17) und den angrenzenden Führungshülsen (27) jeweils ein elastisches Dämpfungsglied (32) vorgesehen ist, das die Sperrbolzen (12, 13) umgibt.

8. Feststellvorrichtung nach Anspruch 1, dadurch gekennzeichnet, dass an beiden Rohren (16, 17) örtlich eine Querschnittsverengung (33, 34) zur Abstützung der Enden der Druckfeder (18) angeordnet ist.

9. Feststellvorrichtung nach Anspruch 1, dadurch gekennzeichnet, dass die beiden Rohre (16, 17) aus Kunststoff, vorzugsweise aus Polyacetat, hergestellt sind.

10. Feststellvorrichtung nach Anspruch 1, dadurch gekennzeichnet, dass der Bowdenzug (19) zwischen einem Lagerbock (41) und der Querschnittsverengung (34) des mit einer Schlitzöffnung (35) versehenen Rohres (17) neben der Seele (45) eine Hülle (46) aufweist, wogegen im nachfolgenden Bereich lediglich die Seele (45) des Bowdenzuges (19) weitergeführt und endseitig mit dem Sperrbolzen (12) verbunden ist.

11. Feststellvorrichtung nach den Ansprüchen 1 und 10, dadurch gekennzeichnet, dass der Bowdenzug (19) durch den hohl ausgebildeten Sperrbolzen (12) und die beiden Rohre (16, 17) hindurchgeführt ist, durch die Schlitzöffnung (35) aus dem Rohr (17) austritt und danach in einem etwa S-förmigen Verlauf zum Betätigungsorgan (14) weitergeführt ist.

12. Feststellvorrichtung nach Anspruch 1, dadurch gekennzeichnet, dass an dem dem Betätigungsorgan (14) zugewandten Ende der Hülle (46) eine Gewindehülse (42) angeordnet ist, die einstellbar mit dem Lagerbock (41) zusammenwirkt.

13. Feststellvorrichtung nach Anspruch 1, dadurch gekennzeichnet, dass die Seele (45) des Bowdenzuges (19) auf der dem Betätigungsorgan (14) zugekehrten Seite eine Ringöse (40) aufweist, die drehbar mit einem Hebelarm (38) des Betätigungsorgans (14) verbunden ist.

14. Feststellvorrichtung nach Anspruch 1, dadurch gekennzeichnet, dass sich das mit einem Verstärkungsring (47) versehene Ende (48) der Hülle (46) an der Querschnittsverengung (34) des Rohres (17) abstützt und zwar auf der der Druckfeder (18) gegenüberliegenden Seite.

**Revendications**

1. Dispositif de fixation pour sièges de véhicule pouvant coulisser longitudinalement, dans lesquels la partie de siège (2) est guidée au moyen de glissières (5) dans des rails de guidage ancrés au plancher du véhicule, où, pour le blocage de la position du siège choisie chaque fois, deux chevilles d'arrêt (13) montées de façon à pouvoir être déplacées en direction transversale, peuvent, au moyen d'organes de transmission et d'un organe de manœuvre (14) , être amenées en prise avec des crans des rails de guidage (7) prévus sur des côtés longitudinaux opposés du siège, caractérisé en ce que les organes de transmission sont formés par deux tubes (16, 17) disposés télescopiquement, qui s'étendent entre les glissières (5) et transversalement à elles et sont reliés rigidement aux chevilles d'arrêt (12, 13), les deux tubes (16, 17) étant attaqués par un ressort de compression intérieur (18) et le dispositif de fixation (11) comprenant un câble Bowden (19) qui coopère d'une part avec l'organe de manœuvre (14) et, d'autre part, avec la cheville (12) ainsi que le tube (17) relié à l'autre cheville (13), de telle façon que, lors d'un pivotement de l'organe den manœuvre (14), il se produit un déplacement axial des deux chevilles (12, 13) dans la direction du plan de symétrie longitudinal (A-A) du siège, de sorte que les chevilles (12, 13) se dégagent des crans (15) du rail de guidage (7).

2. Dispositif de fixation selon la revendication 1, caractérisé en ce que les chevilles (12, 13) s'engagent partiellement dans des extrémités extérieures (30, 31) des tubes (16, 17), un élément de liaison amovible (21) étant prévu entre les chevilles (12, 13) et chaque tube (16, 17).

3. Dispositif de fixation selon la revendication 2, caractérisé en ce que l'élément de liaison (21) est formé par une goupille cannelée (22) disposée radialement qui passe à travers la cheville (12, 13) et des sections de paroi opposées du tube (16, 17), une section terminale saillante (23) de la goupille cannelée (22) coopérant avec un étrier de butée (24) fixé au châssis de siège (3).

4. Dispositif de fixation selon la revendication 3, caractérisé en ce que la section terminale saillante (23) s'étend à l'intérieur des ailes (25, 26) de l'étrier de butée (24) disposées en V.

5. Dispositif de fixation selon la revendication 1, caractériseé en ce que les chevilles (12, 13) sont placées dans des douilles de guidage (27) des deux côtés du rail de guidage (7).

6. Dispositif de fixation selon la revendication 5, caractérisé en ce que les douilles de guidage (27) peuvent être vissées, de l'extérieur de la glissière (5), dans des alésages taraudés (28) qui y sont placés.

7. Dispositif de fixation selon la revendication 1, caractérisé en ce qu'il est prévu entre les extrémiteés extérieures (30, 31) des deux tubes (16, 17), et les douilles de guidage (27) contiguës, respectivement, un organe d'amortissement élastique (32) qui entoure les chevilles (12, 13).

8. Dispositif de fixation selon la revendication 1, caractérisé en ce qu'un rétrécissement de section 33, 34) est prévu localement sur les deux tubes (16, 17), pour l'appui des extrémités du ressort de compression (18).

9. Dispositif de fixation selon la revendication 1, caractérisé en ce que les deux tubes (16, 17) sont en matière plastique, de préférence en polyacétate.

10. Dispositif de fixation selon la revendication 1, caractérisé le ce que le câble Bowden (19) comporte entre un support (41) et le rétrécissement de section (34) du tube (17) comportant une ouverture en forme de fente (35), en plus de l'âme (45) une gaine (46), tandis que, dans la zone suivante, seule l'âme (45) du câble Bowden (19) continue et est reliée à l'extrémité à la cheville (12).

11. Dispositif de fixation selon les revendications 1 et 10, caractérisé en ce que le câble Bowden (19) passe à travers la cheville (12) de conformation creuse et les deux tubes (16, 17), sort du tube (17) par l'ouverture en forme de fente (35), puis continue jusqu' à lorgane de manœuvre (14) avec une allure sensiblement en S.

12. Dispositif de fixation selon la revendication 1, caractérisé en ce qu'on prévoit à l'extrémité de la gaine (46) située du côté de l'organe de manœuvre (14) une douille filetée (42) qui coopère de façon réglable avec le support (41).

13. Dispositif de fixation selon la revendication 1, caractérisé en ce que l'âme (45) du câble Bowden (19) comporte, du côté de l'organe de manœuvre (14), un anneau (40) qui est relié avec possibilité de rotation à un bras de levier (38) de l'organe de manœuvre (14).

14. Dispositif de fixation selon la revendication 1, caractérisé en ce que l'extrémité (48) de la gaine (46) comportant une bague de renforcement (47) s'appuie sur le rétrécissement de section droite (34) du tube (17), et cela du côté opposé au ressort de compression (18).

**Claims**

1. A locking device for longitudinally movable vehicle seats, in which the seat part (2) is guided by means of slide rails (5) in guide rails fixed on the vehicle floor, wherein two transversely movably mounted locking pins (13) can be brought into engagement with notches in the guide rails (7) provided on opposing longitudinal sides of the seat by means of transmission members and an actuating member (14) in order to arrest the seat position selected at any time, characterised in that the transmission members are formed by two telescopically arranged tubes (16, 17) which extend between and transversely to the slide rails (5) and are rigidly connected to the locking pins (12, 13), the two tubes (12, 13) being loaded by an internal compression spring (18) and the locking device (11) comprising a Bowden wire (19) which co-operates, on the one hand, with the actuating member (14) and, on the other hand, with the locking pin (12) and with the tube (17) connected to the locking pin (13) in such a way that, during a pivoting movement of the actuating member (14), an axial movement of the two locking pins (12, 13) in the direction of the longitudinal centre plane (A-A) of the seat occurs, causing the locking pins (12, 13) to be disengaged from the notches (15) in the guide rail (7).

2. A locking device according to claim 1 characterised in that the locking pins (12, 13) penetrate in part into outer ends (30, 31) of the tubes (16, 17), a detachable connecting element (21) being provided between the locking pin (12, 13) and each tube (16, 17).

3. A locking device according to claim 2, characterised in that the connecting element (21) is formed by a radially arranged grooved pin (22) which is guided through the locking pin (12, 13) and opposing wall portions of the tube (16, 17), a projecting end portion (23) of the notch pin (22) cooperating with a stop hoop (24) fixed on the seat frame (3).

4. A locking device according to claim 3, characterised in that the projecting end portion (23) extends inside the webs (25, 26) arranged in a V of the stop hoop (24).

5. A locking device according to claim 1, characterised in that the locking pins (12, 13) are mounted on each side of the guide rail (7) in the guide sleeves (27).

6. A locking device according to claim 5, characterised in that the guide sleeves (27) can be rotated, from the exterior of the slide rails (5) in threaded holes (28) arranged thereon.

7. A fixing device according to claim 1, characterised in that a respective elastic damping element (32) which surround the locking pin (12, 13) is provided between the outer ends (30, 31) of the two tubes (16, 17) and the adjacent guide sleeves (27).

8. A. locking device according to claim 1, characterised in that a cross-sectional constriction (33, 34) is arranged locally on the two tubes (16, 17) for supporting the ends of the compression spring (18).

9. A locking device according to claim 1, characterised in that the two tubes (16, 17) are produced from plastics material, preferably from polyacetate.

10. A locking device according to claim 1, characterised in that the Bowden wire (19) has a sheath (46) in addition to the core (45) between a bearing block (41) and the cross sectional constriction (34) of the tube (17) provided with a slot (35), whereas only the core (45) of the Bowden wire (19) is continued in the following region and is connected at its ends to the locking pin (12).

11. A locking device according to claims 1 and 10, characterised in that the Bowden wire (19) is guided through the hollow locking pin (12) and the two tubes (16, 17) issues from the tube (17) through the slot (35) and is then continued in an approximately S-shaped path to the actuating member (14).

12. A locking device according to claim 1, characterised in that a threaded sleeve (42) adjustably co-operating with the bearing block (41) is arranged on the end of the sheath (46) facing the actuating member (14).

13. A locking device according to claim 1, characterised in that the core (45) of the Bowden wire (19), on the side facing the actuating member (14), has an annular eyelet (40) which is rotatably connected to a lever arm (38) of the actuating member (14).

14. A locking device according to claim 1, characterised in that the end (48) of the sheath (46) provided with a reinforcing ring (47) is supported on the cross-sectional constriction (34) of the tube (17) on the side opposite the compression spring (18).

FIG.1

FIG. 2

EP 0 189 531 B1

FIG.3

EP 0 189 531 B1